# FASCICULE DE BREVET EUROPEEN

(11) **EP 2 378 930 B1**
(45) Date de publication et mention de la délivrance du brevet: **07.11.2012**
(21) Numéro de dépôt: 09795466.3
(22) Date de dépôt: 19.11.2009
(51) Int. Cl.: A47J 31/06, A47J 31/32

(54) **DISPOSITIF DE FILTRATION POUR DES INFUSIONS ET APPAREIL DE CONFECTION D'INFUSIONS ÉQUIPÉ D'UN TEL DISPOSITIF**
AUFGUSSFILTERVORRICHTUNG UND GERÄT MIT EINER SOLCHEN VORRICHTUNG ZUM AUFBRÜHEN VON AUFGÜSSEN
INFUSION FILTERING DEVICE AND APPLIANCE FOR BREWING INFUSIONS FITTED WITH SUCH A DEVICE

(30) Priorité: 20.11.2008 FR 0806515
(43) Date de publication de la demande: 26.10.2011
(73) Titulaire: Handpresso, 77300 Fontainebleau (FR)
(72) Inventeur: NIELSEN, Henrik, 77300 Fontainebleau (FR); PETITDEMANGE, David, 77000 Vaux-Le-Pénil (FR); TEXIER, François, 74100 Seynod (FR)
(74) Mandataire: Cardy, Sophie Marie
(86) Numéro de dépôt international: PCT/FR2009/052219
(87) Numéro de publication internationale: WO 2010/058128

(56) Documents cités:
- FR-A- 2 132 005
- FR-A- 2 912 664
- US-A- 5 715 741
- US-B1- 6 481 338

## Description

L'invention, se rapporte à un dispositif de filtration équipant une chambre à infusion d'un appareil de confection d'infusions tel que, par exemple, une cafetière et comportant un filtre situé sous une buse d'arrivée d'eau chaude pratiquée dans la chambre, une cuvette ayant une paroi latérale, un fond comportant un filtre et situé en regard d'une goulotte d' écoulement de l'infusion pratiquée dans une pièce de fermeture de la chambre; l'espace généré entre les deux filtres étant destiné à recevoir une certaine quantité de produits à infuser, par exemple de la mouture de café.

On connaît déjà un dispositif de filtration de ce genre, voir, par exemple, le brevet FR 2557789, dans lequel le problème de l'éjection de la galette de marc une fois comprimée dans la cuvette est résolu par un choc provoqué directement sur la pièce de fermeture ; c'est pourquoi ce brevet vise à résoudre la retenue du filtre dans cette pièce de fermeture lors de l'éjection de la galette.

Un autre dispositif de filtration de ce genre est décrit dans le document US-A-6481338.

Il existe également des dispositifs d'éjection automatique de la galette par action mécanique sur le fond du filtre monté mobile dans la cuvette pour amener la galette hors de la chambre d'infusion.

L'éjection et le nettoyage des filtres de sortie ont toujours posé des problèmes et l'art antérieur est riche de solutions toutes complexes mécaniquement et onéreuses ; voir même une solution de nettoyage par brosse rotative : US4151626.

Tous ces dispositifs sont efficaces, mais, sont difficiles à mettre en oeuvre et sont de fabrication onéreuse.

L'invention a donc pour but de pallier les inconvénients de l'art antérieur en réalisant un dispositif de filtration de conception très simplifiée, et procurant une grande et rapide commodité d'éjection de la galette de marc par tout utilisateur.

Selon l'invention, le filtre de la cuvette présente une paroi déformable susceptible d' occuper, sous l'effet d'une force manuelle, deux états stables de part et d'autre d'une position instable, soit un état de réception de la mouture en lequel la paroi est saillante vers l'extérieur de la cuvette, soit un état d'éjection de la mouture en lequel la paroi est saillante vers l'intérieur de la cuvette et en lequel il est amené par ladite force appliquée de l'extérieur sur ladite paroi. Avec une telle construction, on comprendra que, non seulement, on agrandit le volume de la cuvette lorsque le filtre est en son état de réception, mais aussi, que l'on réalise une extraction automatique du marc hors de la cuvette lorsque le filtre vient en son état d'éjection. Selon une autre caractéristique de l'invention, le filtre d'entrée est formé en une pièce en un matériau suffisamment rigide pour obtenir un effet bistable. Un excellent résultat de cloquage de part et d'autre de la position instable a été atteint avec un filtre constitué par une toile métallique, et avec la paroi latérale de la cuvette réalisée en matière plastique ; ledit filtre étant fixé sur la bordure de ladite paroi par surmoulage. Ainsi, grâce à cette construction particulière, on réalise un système simple d'éjection de la galette par simple cloquage du filtre de l'extérieur vers l'intérieur.

Toujours dans un but d'optimisation des coûts de fabrication et selon une autre caractéristique de l'invention, le filtre de la cuvette est constitué par une toile en matière plastique venue de moulage avec la paroi latérale de la cuvette également réalisée en matière plastique.

L'invention concerne également un appareil de confection d'infusions, comportant un boîtier formant la tête d'infusion qui renferme une chambre d'infusion de forme générale cylindrique et qui comporte un réservoir d'eau chaude communiquant avec une buse d'arrivée d'eau chaude sous pression, une pièce de fermeture montée amovible sur la tête d'infusion et présentant la forme générale d'un godet solidaire d'un filtre et dont le fond est muni d'une goulotte de sortie de l'infusion. Cet appareil est remarquable en ce qu'il comporte un support tubulaire présentant un large orifice formant la buse et fixé de façon étanche sur la paroi interne du réservoir et destiné à former un berceau pour une cuvette d'un dispositif de filtration selon l'invention et montée dans ce berceau avec le filtre en regard de la buse. Grâce à cette conception, le dispositif de filtration est d'une réalisation simple, économique et d'une grande commodité d'utilisation.

Les caractéristiques et avantages de l'invention ressortiront d'ailleurs de la description qui va suivre, prise à titre d'exemple non limitatif, en référence aux dessins annexés dans lesquels :
La figure 1 est une vue schématique d'un appareil comportant un dispositif de filtration équipé d'une cuvette, illustré en coupe verticale et selon l'invention ;
La figure 2 est une vue seule en coupe verticale de la cuvette du dispositif de filtration avec un filtre en un état d'éjection du marc ;
La figure 3 est une représentation partielle en coupe verticale d'un appareil de confection d'infusions équipé d'un dispositif de filtration selon l'invention.

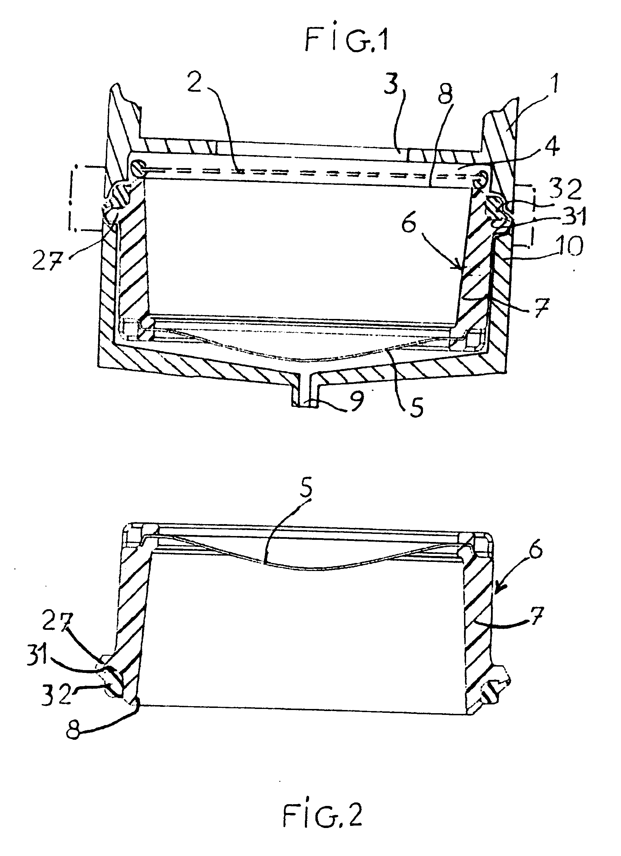

A la figure 1,on a représenté de façon schématique un dispositif de filtration équipant un appareil de confection d'infusion comportant un boîtier 1, un filtre 2 situé sous une buse 3 d'arrivée d'eau chaude pratiquée dans une chambre d'infusion 4, un filtre 5 solidaire d'une cuvette 6 et formant son fond et comportant une paroi latérale 7 et un débouché 8 et situé en regard d'une goulotte 9 d'écoulement de l'infusion pratiquée dans une pièce de fermeture 10 de ladite chambre montée de façon amovible sur le boîtier 1 par tous moyens connus schématisés en traits interrompus ; l'espace généré entre les deux filtres étant destiné à recevoir une certaine quantité de produits à infuser. Par produits à infuser, on entend notamment de la mouture de café, mais on peut prévoir également du thé, de la poudre de chocolat etc.. Pour la suite de la description, le produit à infuser sera de la mouture de café. Le boîtier 1 comprend, de façon classique, un mécanisme de pompage d'eau chaude sous pression alimentant la buse 3.

Selon l'invention, le filtre 5 de la cuvette 6 présente une paroi déformable susceptible d'occuper, sous l'effet d'une force manuelle, deux états stables de part et d'autre d'une position instable, soit un état de réception de la mouture en lequel la paroi est saillante vers l'extérieur de la cuvette, soit un état d'éjection de la mouture en lequel la paroi est saillante vers l'intérieur de la cuvette et en lequel il est amené par ladite force appliquée de l'extérieur sur ladite paroi.

La position instable du filtre peut être définie par sa traversée d'un plan virtuel passant par l'ancrage du bord externe de la paroi du filtre sur le débouché 8 de la paroi latérale 7 de la cuvette 6.

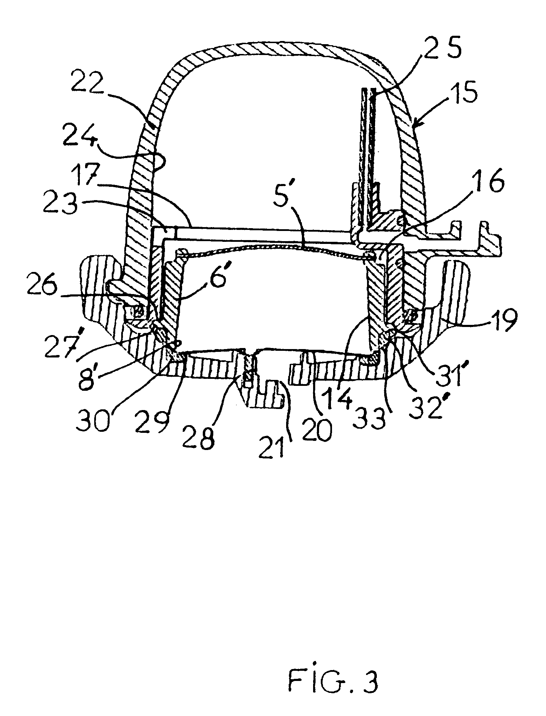

Ainsi, avant le remplissage de la cuvette 6 avec la mouture de café , on place le filtre 5 en son état de réception(figures 1 et 3) par une force appliquée manuellement par l'utilisateur de l'intérieur de la cuvette vers l'extérieur et le volume de la cuvette s'en trouve légèrement agrandi. Puis, on place la cuvette remplie de café dans la chambre d'infusion 4 et l'on procède à l'obturation de la chambre d'infusion par ladite pièce de fermeture ; l'infusion de la mouture de café sous pression peut alors être effectuée.

On constate lors de ce processus de filtration-infusion qu'il se forme, en fin d'infusion par compression de cette mouture sur le filtre 5, une galette de marc compacte qui adhère assez fortement à la paroi latérale 7 de la cuvette 6 et qui s'est détachée du filtre 2 ,ceci en fonction du degré de remplissage de la cuvette.

On comprendra que, une fois la pièce de fermeture 10 enlevée et la cuvette 6 récupérée, il suffit d'exercer une force manuelle sur le filtre 5 pour le faire passer automatiquement et brutalement de sa première position stable(figure 1) à la seconde position stable(figure 2). Au cours du passage de la position instable, le filtre 5 se cloque vers l'intérieur en émettant un bruit de cliquet et vient pousser ou frapper violemment cette galette pour lui imprimer une force d'éjection, la galette étant alors extraite automatiquement de sa cuvette proprement et sans difficulté.

Selon une caractéristique importante de l'invention, la paroi latérale 7 de la cuvette 6 est réalisée par une pièce cylindrique en matière plastique et le filtre 5 est constitué par une toile métallique à mailles fines, de forme circulaire à paroi pré-compressée de forme bombée, et est fixé sur la bordure de ladite paroi par surmoulage pour former le fond de ladite cuvette.

Bien entendu, le filtre 5 peut être constitué par une toile en matière plastique et venir de moulage avec la paroi latérale 7 de la cuvette 6.

Les essais effectués ont permis, pour obtenir un bon et durable cloquage dans les deux sens et garantir une excellente filtration, de sélectionner une toile métallique en acier inoxydable présentant les caractéristiques suivantes :épaisseur totale de l'ordre de 0,25 mm, maillage de l'ordre de 0,35 mm. Afin d'assurer une étanchéité au niveau de la chambre d'infusion, la paroi latérale 7 de la cuvette 6 porte, au niveau du débouché, sur sa face externe une rigole 31 dans laquelle est logé un joint torique 32.

En se rapportant à la figure 3, on a illustré une nouvelle application de ce dispositif de filtration à un appareil agencé dans un appareil de confection d'infusions du type décrit dans la demande de brevet no FR07011310000 déposée par la Demanderesse le 16 février 2007. Comme représenté, cet appareil a été modifié pour recevoir le dispositif de filtration selon l'invention. L'appareil représenté partiellement comporte donc un boîtier formant tête d'infusion 15 et renfermant une chambre d'infusion 16, une buse 17 d'arrivée d'eau chaude sous pression, une pièce de fermeture 19 montée amovible sur la tête, présentant la forme générale d'un godet et comprenant un filtre 20 situé en regard d'une goulotte 21 d'écoulement de l'infusion terminée, pratiquée dans le fond du godet ; la chambre d'infusion étant adaptée à contenir une cuvette 6' avec son filtre 5' tourné vers la buse 17.

Cette tête comprend en outre un réservoir d'eau chaude 22 communiquant avec la buse 17 qui est formée par un large orifice pratiqué dans un support 23 fixé de façon étanche sur la paroi interne 24 du réservoir et destiné à former un berceau pour la cuvette 6. Comme expliqué dans cette demande de brevet, l'eau chaude est propulsée sous une pression située de préférence entre 14 et 20 bars par la pression d'air générée dans le réservoir 22 par un moyen de pressurisation non illustré et relié à un conduit d'amenée d'air 25 saillant vers le haut dans ce réservoir et solidaire présentement dudit support 23. Dans la réalisation représentée, le support 23 est formé par une bague annulaire présentant, sur son bord périphérique tourné vers la pièce de fermeture, un épaulement 26 destiné à recevoir une collerette 27' saillante de la face externe de la cuvette.

La cuvette 6' présente également une forme générale complémentaire cylindrique et est conforme avec celle de la réalisation de l'invention, a savoir la paroi du filtre 5' est formée en une seule pièce en un matériau suffisamment rigide pour obtenir un effet bistable. Présentement, le filtre 5'est réalisé en une toile métallique en acier inoxydable à mailles fines dont le bord circulaire est surmoulé dans la bordure de fond de la paroi latérale de la cuvette qui est réalisée en un matériau plastique.

Dans cette réalisation particulière de l'appareil, le filtre de sortie 20 est solidaire de la pièce de fermeture 19 et est fixé à cet effet par une vis 28 ancrée dans la paroi de la pièce de fermeture et dont le bord périphérique 29 est engagé dans un joint 30 enchâssé dans ladite paroi .Le débouché 8' de la cuvette est adjacent au joint 30 pour complémenter l'étanchéité.

De manière à assurer un bon fonctionnement du dispositif de filtration, la paroi latérale 14 de la cuvette 6 comporte, au niveau du débouché 8' et dans la collerette 27', une rigole 31' dans laquelle est logé un joint torique 32' adapté à venir reposer sur un siège annulaire 33 tronconique pratiqué sur la face interne du godet lorsque le dispositif de filtration est mis en place pour la confection de l'infusion.

Cette application du dispositif de filtration selon l'invention permet de remplir la cuvette 6' avec son filtre 5' en état de réception de mouture de café ou thé et de l'insérer directement dans le support 23 qui avec la tête d'infusion a été retournée de 180 degrés pour avoir le réservoir tourné vers le bas et de fermer la chambre d'infusion, avec grande facilité, au moyen de la pièce de fermeture 19. Une fois l'opération d'infusion terminée, il suffit à l'utilisateur de récupérer la cuvette 6' et d'exercer une légère pression sur le filtre 5' pour le faire passer à la position instable puis automatiquement à sa position stable d'éjection pour obtenir le cloquage inverse et simultanément l'éjection de la galette de marc.

Selon une variante non représentée de l'invention, le filtre de sortie n'est plus solidaire de la pièce de fermeture, mais est monté sur un orifice d'un couvercle fixé de façon amovible sur le débouché de la cuvette 6 ou 6' de manière à constituer une boîte de réception de la mouture. Grâce à cette réalisation, on peut prévoir à l'avance de remplir de mouture une série de boîtes que l'on utilisera d'affilée et reporter l'opération d'éjection du marc à un autre moment.

## Revendications

1. Dispositif de filtration équipant une chambre à infusion (4 ;16) d'un appareil de confection d'infusions et comportant un filtre(2) situé sous une buse (3 ;17) d'arrivée d'eau chaude pratiquée dans la chambre, une cuvette(6 ;6') ayant une paroi latérale (7 ;14), un fond comportant un filtre(5 ;5') et situé en regard d'une goulotte d' écoulement(9 ;21) de l'infusion pratiquée dans une pièce de fermeture (10 ;19) de la chambre ; l'espace généré entre les deux filtres étant destiné à recevoir une certaine quantité de produits à infuser, **caractérisé en ce que** le filtre(5 ;5') de la cuvette(6 ;6') présente une paroi déformable susceptible d'occuper, sous l'effet d'une force manuelle, deux états stables de part et d'autre d'une position instable, soit un état de réception de la mouture en lequel la paroi est saillante vers l'extérieur de la cuvette, soit un état d'éjection de la mouture en lequel la paroi est saillante vers l'intérieur de la cuvette et en lequel il est amené par ladite force appliquée de l'extérieur sur ladite paroi.

2. Dispositif de filtration selon la revendication 1, **caractérisé en ce que** le filtre(5 ;5') de la cuvette(6 ;6') est formé en une pièce en un matériau suffisamment rigide pour obtenir un effet bistable.

3. Dispositif de filtration selon la revendication 1 ou 2 caractérisé en ce le filtre(5 ;5') de la cuvette est constitué par une toile métallique en acier inoxydable ayant les propriétés suivantes : épaisseur totale de l'ordre de 0,25 mm, maillage de l'ordre de 0,35 mm.

4. Dispositif de filtration selon la revendication 3, **caractérisé en ce que** la paroi latérale(7 ;14) de la cuvette(6 ;6') est réalisée en matière plastique et le filtre(5 ;5') est fixé sur la bordure de ladite paroi par surmoulage.

5. Dispositif de filtration selon la revendication 2, **caractérisé en ce que** la paroi latérale(7 ;14) de la cuvette(6 ;6') est réalisée en matière plastique et le filtre(5 ;5') est constitué par une toile en matière plastique venue de moulage avec ladite paroi.

6. Dispositif de filtration selon l'une quelconque des revendications précédentes, **caractérisé en ce que** la paroi latérale(7 ;14) de la cuvette(6 ;6') porte, au niveau du débouché, sur sa face externe une rigole(31 ;31') dans laquelle est logé un joint(32 ;32').

7. Dispositif de filtration selon l'une quelconque des revendications précédentes, **caractérisé en ce que** le filtre(2 ;20) est monté sur un orifice d'un couvercle fixé de façon amovible sur le débouché(8 ;8') de la cuvette(6.6') de manière à constituer une boîte.

8. Appareil de confection d'infusions comportant un boîtier formant la tête d'infusion (15)qui renferme une chambre d'infusion (16)de forme générale cylindrique et qui comporte un réservoir d'eau chaude (22) communiquant avec une buse (17) d'arrivée d'eau chaude sous pression, une pièce de fermeture (19) montée amovible sur la tête d'infusion et présentant la forme générale d'un godet solidaire d'un filtre (20)et dont le fond est muni d'une goulotte(21) de sortie de l'infusion, ainsi qu' un support tubulaire(23) présentant un large orifice formant la buse(17)et fixé de façon étanche sur la paroi interne (24) du réservoir (22), **caractérisé en ce que** ledit support (23) forme un berceau d'une cuvette(6') d'un dispositif de filtration selon l'une quelconque des revendications précédentes et montée dans ce berceau avec le filtre(5') en regard de la buse (17), ledit support (23) étant formé par une bague annulaire présentant, sur son bord périphérique tourné vers la pièce de fermeture, un épaulement (26) destiné à recevoir une collerette (27') saillante de la face externe de la cuvette (6') et présentant une rigole (31') dans laquelle est logé un joint torique (32') adapté à venir reposer sur un siège annulaire (33) tronconique pratiqué sur la face interne du godet lorsque le dispositif de filtration est mis en place pour la confection de l'infusion.

## Claims

1. A filter device fitted to an infusion chamber (4; 16) of an appliance for preparing infusions and including a filter (2) situated under a hot water admission nozzle (3; 17) formed in the chamber, a cup (6; 6') having a side wall (7; 14), and a bottom including a filter (5; 5') and situated facing an infusion outlet spout (9; 21) formed in a closure part (10; 19) of the chamber; the space generated between the two filters being for receiving a certain quantity of substances for infusion, the device being **characterized in that** the filter (5; 5') of the cup (6; 6') presents a deformable wall suitable, under the effect of manual force, for occupying two stable states on either side of an unstable position, either a state for receiving grounds in which the wall projects towards the outside of the cup, or a state for ejecting grounds in which state the wall projects towards the inside of the cup and into which it is taken by said force being applied on said wall from the outside.

2. A filter device according to claim 1, **characterized in that** the filter (5; 5') of the cup (6; 6') is formed integrally out of a material that is sufficiently rigid to obtain a bistable effect.

3. A filter device according to claim 1 or claim 2, **characterized in that** the filter (5; 5') of the cup is constituted by a stainless steel metal screen having the following properties: total thickness about 0.25 mm; mesh size about 0.35 mm.

4. A filter device according to claim 3, **characterized in that** the side wall (7; 14) of the cup (6; 6') is made of plastics material, and the filter (5; 5') is fastened to the margin of said wall by overmolding.

5. A filter device according to claim 2, **characterized in that** the side wall (7; 14) of the cup (6; 6') is made of plastics material, and the filter (5; 5') is constituted by a screen of plastics material molded integrally with said wall.

6. A filter device according to any preceding claim, **characterized in that** the side wall (7; 14) of the cup (6; 6') includes a groove (31; 31') in its outside face level with the outlet, a gasket (32; 32') being lodged in said groove.

7. A filter device according to any preceding claim, **characterized in that** the filter (2; 20) is mounted on an orifice of a cover movably fastened on the outlet (8; 8') of the cup (6; 6') so as to constitute a box.

8. An appliance for preparing infusions, the appliance comprising a housing forming the infusion head (15) that contains an infusion chamber (16) of generally cylindrical shape and that includes a tank of hot water (22) communicating with a pressurized hot water admission nozzle (17), a closure part (19) movably mounted on the infusion head and presenting the general shape of a goblet secured to a filter (20) and having a bottom provided with an outlet (21) for delivering the infusion, together with a tubular support (23) presenting a large orifice forming the nozzle (17) and fastened in leaktight manner on the inside wall (24) of the tank (22), the appliance being **characterized in that** said support (23) forms a cradle for a cup (6') of a filter device according to any preceding claim and mounted in the cradle with the filter (5') facing the nozzle (17), said support (23) being formed by an annular ring presenting a shoulder (26) on its peripheral edge facing towards the closure part, which shoulder is designed to receive a collar (27') projecting from the outside face of the cup (6') and presenting a groove (31') in which an 0-ring gasket (32') is housed that is adapted to rest on a frustoconical annular seat (33) formed on the inside face of the goblet when the filter device is in place for preparing the infusion.

## Patentansprüche

1. Filtervorrichtung, die eine Aufgußkammer (4; 16) eines Gerätes zur Zubereitung von Aufgußgetränken ausstattet und die ein Filter (2), welches unter einer in der Kammer ausgebildeten Düse (3; 17) für den Zulauf von heißem Wasser gelegen ist, eine Schale (6; 6') mit einer Seitenwand (7; 14), einen Boden, der ein Filter (5; 5') umfaßt und gegenüber einer in einem Verschlußteil (10; 19) der Kammer ausgebildeten Rinne zum Ablaufen (9; 21) des Aufgußgetränks gelegen ist, umfaßt, wobei der zwischen den beiden Filtern erzeugte Raum dazu bestimmt ist, eine bestimmte Menge an aufzugießenden Produkten aufzunehmen, **dadurch gekennzeichnet, daß** das Filter (5; 5') der Schale (6; 6') eine verformbare Wand aufweist, die geeignet ist, unter der Wirkung einer manuellen Kraft zwei stabile Zustände auf beiden Seiten einer instabilen Position einzunehmen, entweder einen Zustand zum Aufnehmen des Mahlgutes, in dem die Wand zur Außenseite der Schale vorspringt, oder einen Zustand zum Auswerfen des Mahlgutes, in dem die Wand zur Innenseite der Schale vorspringt und in den es durch die von außen auf die Wand angelegte Kraft gebracht wird.

2. Filtervorrichtung nach Anspruch 1, **dadurch gekennzeichnet, daß** das Filter (5; 5') der Schale (6; 6') aus einem Stück aus einem Material gebildet ist, das starr genug ist, um eine bistabile Wirkung zu erzielen.

3. Filtervorrichtung nach Anspruch 1 oder 2, **dadurch gekennzeichnet, daß** das Filter (5; 5') der Schale von einem Metalldrahtgewebe aus rostfreiem Stahl mit den folgenden Eigenschaften, nämlich Gesamtdicke in der Größenordnung von 0,25 mm, Maschenöffnung in der Größenordnung von 0,35 mm, gebildet ist.

4. Filtervorrichtung nach Anspruch 3, **dadurch gekennzeichnet, daß** die Seitenwand (7; 14) der Schale (6; 6') aus Kunststoff gefertigt ist und das Filter (5; 5') an dem Rand der Wand durch Anformen befestigt ist.

5. Filtervorrichtung nach Anspruch 2, **dadurch gekennzeichnet, daß** die Seitenwand (7; 14) der Schale (6; 6') aus Kunststoff gefertigt ist und das Filter (5; 5') von einem mit der Wand aus einem Stück geformten Kunststoffgewebe gebildet ist.

6. Filtervorrichtung nach einem der vorhergehenden Ansprüche, **dadurch gekennzeichnet, daß** die Seitenwand (7; 14) der Schale (6; 6') im Bereich des Ausgangs, an ihrer Außenseite eine Rinne (31; 31 `) trägt, in der eine Dichtung (32; 32') aufgenommen ist.

7. Filtervorrichtung nach einem der vorhergehenden Ansprüche, **dadurch gekennzeichnet, daß** das Filter (2; 20) an einer Öffnung eines Deckels, der an dem Ausgang (8; 8') der Schale (6; 6') lösbar befestigt ist, angebracht ist, so daß eine Dose gebildet wird.

8. Gerät zur Zubereitung von Aufgußgetränken, umfassend ein Gehäuse, das den Aufgußkopf (15) bildet, der eine allgemein zylinderförmige Aufgußkammer (16) enthält und der einen Heißwasserbehälter (22), welcher mit einer Düse (17) für den Zulauf von heißem Wasser unter Druck in Verbindung steht, ein Verschlußteil (19), das an dem Aufgußkopf lösbar angebracht ist und die allgemeine Form eines Bechers aufweist, der mit einem Filter (20) fest verbunden ist und dessen Boden mit einer Rinne (21) für den Auslaß des Aufgußgetränks ausgestattet ist, sowie einen röhrenförmigen Träger (23), der eine die Düse (19) bildende breite Öffnung aufweist und an der Innenwand (24) des Behälters (22) dicht befestigt ist, umfaßt, **dadurch gekennzeichnet, daß** der Träger (23) eine Lagerung einer Schale (6') einer Filtervorrichtung nach einem der vorhergehenden Ansprüche bildet, die in dieser Lagerung mit dem Filter (5') gegenüber der Düse (17) angebracht ist, wobei der Träger (23) von einer ringförmigen Buchse gebildet ist, die an ihrem dem Verschlußteil zugewandten Umfangsrand eine Schulter (26) aufweist, die dazu bestimmt ist, einen Kragen (27') aufzunehmen, der von der Außenseite der Schale (6') vorspringt und eine Rinne (31') aufweist, in der ein O-Ring (32') aufgenommen ist, der ausgebildet ist, um auf einem an der Innenseite des Bechers ausgebildeten kegelstumpfförmigen, ringförmigen Sitz (33) aufzuliegen, wenn die Filtervorrichtung für die Zubereitung des Aufgußgetränks eingesetzt ist.
